# EUROPEAN PATENT APPLICATION

(11) **EP 4 836 001 A1**
(43) Date of publication of application: **04.11.2026**
(21) Application number: 24910036.3
(22) Date of filing: 19.09.2024
(51) Int. Cl.: H01M 4/525, H01M 4/505, H01M 4/485, H01M 4/131, H01M 10/0525

(54) **POSITIVE ELECTRODE MATERIAL FOR LITHIUM-ION BATTERY AND PREPARATION METHOD THEREFOR, POSITIVE ELECTRODE SHEET, AND LITHIUM-ION BATTERY**

(30) Priority: 29.12.2023 CN 202311865514
(71) Applicant: BYD Company Limited, Shenzhen, Guangdong 518118 (CN)
(72) Inventor: HU, Chao, Shenzhen, Guangdong 518118 (CN); LI, Xingqun, Shenzhen, Guangdong 518118 (CN); LIU, Xufeng, Shenzhen, Guangdong 518118 (CN); TIAN, Ye, Shenzhen, Guangdong 518118 (CN); HE, Jiao, Shenzhen, Guangdong 518118 (CN)
(74) Representative: Taor, Simon Edward William
(86) International application number: PCT/CN2024/119566
(87) International publication number: WO 2025/139091

(57) **Abstract**

A positive electrode material for a lithium-ion battery and a preparation method therefor, a positive electrode sheet, and a lithium-ion battery. The positive electrode material has a chemical formula of LiNi_{1-x-y}CoₓM_{y}M'bO₂, wherein 0<x≤0.3, 0<y≤0.4, 0≤b≤0.05, M is selected from one or more of Mn, Ti, Zn, Mg, Mo, V, Ga and Al, and M' is selected from one or more of Zr, Ti, Zn, Mg, Mo, V, Ga and Al. An X-ray diffraction pattern of the positive electrode material has a diffraction peak (108) at a diffraction angle 20 of 64±0.5° and a diffraction peak (110) at a diffraction angle 20 of 65±0.5°; and the diffraction peak (108) and the diffraction peak (110) satisfy: $0.5 < \frac{FWHM \left(108\right) + FWHM \left(110\right)}{2 θ \left(110\right) - 2 θ \left(108\right)} ⩽ 0.75 .$ formula (1)

## Description

### FIELD

The present disclosure belongs to the technical field of energy storage, and particularly relates to a positive electrode material for a lithium ion battery and a preparation method thereof, a positive electrode sheet, and a lithium ion battery.

### BACKGROUND

As the main material of lithium ion battery, the performance of positive electrode material for a lithium ion battery is one of the key factors affecting the energy density of lithium ion battery. The positive electrode material for a lithium ion battery is generally lithium iron phosphate, lithium manganate, lithium cobalt oxide, lithium nickel oxide and lithium nickel cobalt manganate (ternary materials). Lithium nickelcobalt manganate combines the advantages of lithium manganate, lithium cobalt oxide and lithium nickel oxide, and has higher specific capacity, good discharge rate and excellent cycle performance. It is one of the main directions of the development of positive electrode material technology, and it is also the core material that affects the performance, application scenarios and market potential of lithium-ion batteries.

In order to meet the market demand of lithium ion batteries and further improve the specific capacity and cycle performance of ternary materials, the prior art usually adopts surface coating, element doping and increasing nickel content to optimize ternary materials. The introduction of new elements or the change of the ratio of atoms in ternary materials will affect the atomic arrangement and layered orderliness in ternary materials, and the atomic arrangement and layered orderliness in the crystal structure of ternary materials will affect its lithium storage performance. Therefore, it is of great significance and research value to reasonably control the atomic arrangement and layered orderliness of ternary materials and prepare high performance ternary materials.

### SUMMARY

The purpose of the present disclosure is to provide a positive electrode material for a lithium ion battery, a preparation method thereof, a positive electrode sheet, and a lithium ion battery, and to obtain a high-performance positive electrode material for a lithium ion battery by reasonably controlling the atomic arrangement and layered orderliness inside the positive electrode material.

In order to solve the above problems, the present disclosure provides a positive electrode material for a lithium ion battery, the chemical formula of the positive electrode material is LiNi_{1-x-y}CoₓM_{y}M'_{b}O₂, wherein 0<x≤0.3, 0<y≤0.4, 0≤b≤0.05, M is selected from one or more of Mn, Ti, Zn, Mg, Mo, V, Ga, and Al, and M' is selected from one or more of Zr, Ti, Zn, Mg, Mo, V, Ga, and Al;
in the X-ray diffraction pattern of the positive electrode material, it has a (108) diffraction peak at a diffraction angle 2θ of (64 ± 0.5) ° and a (110) diffraction peak at a diffraction angle 2θ of (65 ± 0.5) °;
the (108) diffraction peak and the (110) diffraction peak satisfy:
   $0.5 < \frac{FWHM \left(108\right) + FWHM \left(110\right)}{2 θ \left(110\right) - 2 θ \left(108\right)} ⩽ 0.75$
wherein FWHM (108) is the full width at half maximum of the (108) diffraction peak at the diffraction angle 2θ = (64 ± 0.5) °; and
FWHM (110) is the full width at half maximum of the (110) diffraction peak at the diffraction angle 2θ = (65 ± 0.5) °.

In some embodiments, the positive electrode material is a polycrystalline ternary material; the chemical formula of the positive electrode material is LiNi_{1-x-y}CoₓM_{y}M'_{b}O₂, wherein 0.1 ≤x≤0.2, 0.1≤y≤0.35, 0<b≤0.05, and M is selected from one or more of Mn, Ti, Zn, Mg, Mo, V, Ga and Al; and M' is selected from one or more of Zr, Ti, Zn, Mg, Mo, V, Ga, and Al.

In some embodiments, the (108) diffraction peak and the (110) diffraction peak satisfy: $0.6 < \frac{FWHM \left(108\right) + FWHM \left(110\right)}{2 θ \left(110\right) - 2 θ \left(108\right)} ⩽ 0.75$.

In some embodiments, the (108) diffraction peak and the (110) diffraction peak satisfy: $0.67 < \frac{FWHM \left(108\right) + FWHM \left(110\right)}{2 θ \left(110\right) - 2 θ \left(108\right)} ⩽ 0.75$.

In some embodiments, in the X-ray diffraction pattern of the positive electrode material, the full width at half maximum FWHM (108) of the (108) diffraction peak at a diffraction angle 2θ of (64 ± 0.5) ° is in a range of 0.1 to 0.3.

In some embodiments, in the X-ray diffraction pattern of the positive electrode material, the full width at half maximum FWHM (110) of the (110) diffraction peak at a diffraction angle 2θ of (65 ± 0.5) ° is in a range of 0.1 to 0.3.

In some embodiments, the positive electrode material has an α-NaFeO₂ layered structure.

In a second aspect, the present disclosure provides a method for preparing a positive electrode material for a lithium ion battery, the method includes the following steps:

a lithium-containing compound, a soluble metal salt, cobalt acetate, nickel acetate and a doped metal salt are dispersed in a solvent to obtain a dispersed solution, a pH adjuster is added into the dispersed solution to make the pH of the dispersed solution to 7 to 8, and dried to obtain a precursor material; the precursor material is subjected to first sintering, first cooling, second sintering and second cooling in sequence to obtain the positive electrode material.

The first sintering includes the following steps: the precursor material is sintered for the first time in air atmosphere environment, the first sintering temperature is 300 to 600 °C, the first sintering time is 3 to 6 hours, and the first cooling is performed after the first sintering is completed.

The second sintering includes the following steps: after the first cooling is completed, the precursor material is sintered for the second time in a pure oxygen atmosphere environment, the second sintering temperature is 700 to 950 °C, the second sintering time is 8 to 15 hours, and the second cooling is performed after the second sintering is completed.

In some embodiments, the soluble metal salt and the doped metal salt both include one or more of manganese acetate, titanium acetate, zinc acetate, magnesium acetate, molybdenum acetate, vanadium acetate, germanium acetate, aluminum acetate, zirconium acetate, manganese nitrate, titanium nitrate, zinc nitrate, magnesium nitrate, molybdenum nitrate, vanadium nitrate, germanium nitrate, aluminum nitrate, zirconium nitrate, manganese hydroxide, titanium hydroxide, zinc hydroxide, magnesium hydroxide, molybdenum hydroxide, vanadium hydroxide, germanium hydroxide, aluminum hydroxide, and zirconium hydroxide;

the lithium-containing compound includes one or more of lithium hydroxide, lithium nitrate, lithium carbonate, lithium acetate, lithium chloride, lithium fluoride, and lithium iodide; and

the solvent includes one or more of deionized water, ethanol, methanol, isopropanol, n-butanol, octanol, and decanol.

In some embodiments, the lithium-containing compound, soluble metal salt, nickel acetate, cobalt acetate and doped metal salt are in a metal element molar ratio of (1-1.2):y:1-x-y:x:b, wherein 0<x≤0.3, 0<y≤0.4, 0≤b≤0.05.

In some embodiments, the concentration of the pH adjuster is 1 mol/L to 3 mol/L, and the pH adjuster includes one or more of citric acid, acetic acid, oxalic acid, benzoic acid, acrylic acid, carboxylated graphene, and carboxylated graphite.

In some embodiments, in the step of drying to obtain the precursor material, the drying method is one or more of spray drying, flash evaporation, stirring drying, and dynamic drying.

In some embodiments, in the first sintering, the heating rate is 1 to 8 °C/min, the first cooling temperature is 20 to 30 °C, and the cooling method is quenching, and the material after the first sintering is directly transferred to room temperature;
in the second sintering, the heating rate is 1 to 8 °C/min, the second cooling temperature is 20 to 30 °C, and the cooling method is quenching, and the material after the second sintering is directly transferred to room temperature.

In a third aspect, the present disclosure provides a positive electrode sheet. The positive electrode sheet includes the above positive electrode material for a lithium ion battery or the above positive electrode material prepared by the above method for preparing the positive electrode material for a lithium ion battery.

In some embodiments, the compaction density of the positive electrode sheet is 3 g/cm³ to 3.7 g/cm³.

In a fourth aspect, the present disclosure provides a positive electrode sheet. The positive electrode sheet includes a positive electrode material, the chemical formula of the positive electrode material is LiNi_{1-x-y}CoₓM_{y}M'_{b}O₂, wherein 0<x≤0.3, 0<y≤0.4, 0≤b≤0.05, M is selected from one or more of Mn, Ti, Zn, Mg, Mo, V, Ga, and Al, and M' is selected from one or more of Zr, Ti, Zn, Mg, Mo, V, and Ga;
in the X-ray diffraction pattern of the positive electrode material, it has a (108) diffraction peak at a diffraction angle 2θ of (64 ± 0.5) ° and a (110) diffraction peak at a diffraction angle 2θ of (65 ± 0.5) °;
the (108) diffraction peak and the (110) diffraction peak satisfy:
   $0.5 < \frac{FWHM \left(108\right) + FWHM \left(110\right)}{2 θ \left(110\right) - 2 θ \left(108\right)} ⩽ 0.8$
wherein FWHM (108) is the full width at half maximum of the (108) diffraction peak at the diffraction angle 2θ = (64 ± 0.5) °; and FWHM (110) is the full width at half maximum of the (110) diffraction peak at the diffraction angle 2θ = (65 ± 0.5) °.

In a fifth aspect, the present disclosure provides a lithium ion battery, and the lithium ion battery includes the above positive electrode sheet.

According to the positive electrode material for a lithium ion battery provided by the present disclosure, in the X-ray diffraction pattern of the positive electrode material, the (110) diffraction peak at a diffraction angle 2θ of (65 ± 0.5) ° and the (108) diffraction peak at a diffraction angle 2θ of (64 ± 0.5) ° satisfy: $0.5 < \frac{FWHM \left(108\right) + FWHM \left(110\right)}{2 θ \left(110\right) - 2 θ \left(108\right)} ⩽ 0.75$. The satisfaction of this relational expression can ensure that the material has good layered structure orderliness and reasonable atomic arrangement, so that the prepared positive electrode material has higher mass specific capacity and cycle performance.

According to the positive electrode sheet for a lithium ion battery provided by the present disclosure, during the rolling process of the positive electrode sheet, the structure of the positive electrode material remains intact, that is, the (110) diffraction peak at a diffraction angle 2θ of (65±0.5)° and the (108) diffraction peak at a diffraction angle 2θ of (64±0.5)° of the positive electrode sheet satisfy: $0.5 < \frac{FWHM \left(108\right) + FWHM \left(110\right)}{2 θ \left(110\right) - 2 θ \left(108\right)} ⩽ 0.8$, and a lithium ion battery including the positive electrode sheet has a longer cycle life.

### BRIEF DESCRIPTION OF THE DRAWINGS

FIG. 1 is an XRD pattern of the positive electrode material prepared according to Embodiment 1;
FIG. 2 is an XRD pattern of the positive electrode material prepared according to Embodiment 2;
FIG. 3 is an XRD pattern of the positive electrode material prepared according to Embodiment 3;
FIG. 4 is an XRD pattern of the positive electrode material prepared according to Embodiment 4; and
FIG. 5 is a comparative graph of XRD patterns of positive electrode material in Comparative embodiment 1 and Embodiment 1.

### DETAILED DESCRIPTION

In order to make the technical problems, technical solutions and beneficial effects solved by the present disclosure more clear, the present disclosure will be further described in detail below with reference to the accompanying drawings and embodiments. It should be understood that the specific embodiments described herein are merely for the purpose of explaining the present disclosure and are not intended to limit the present disclosure.

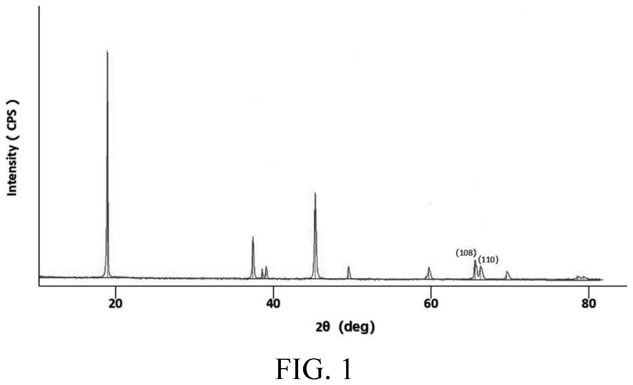

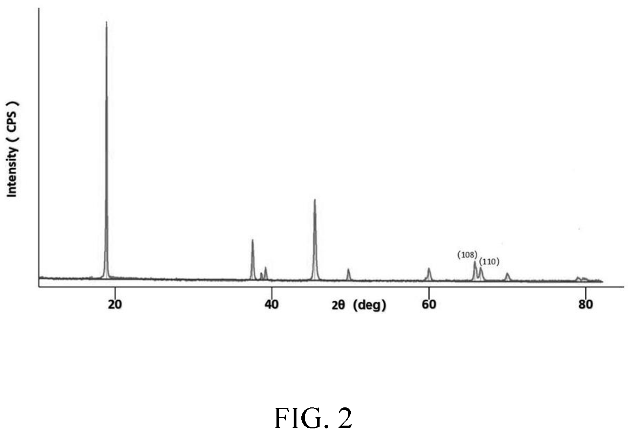

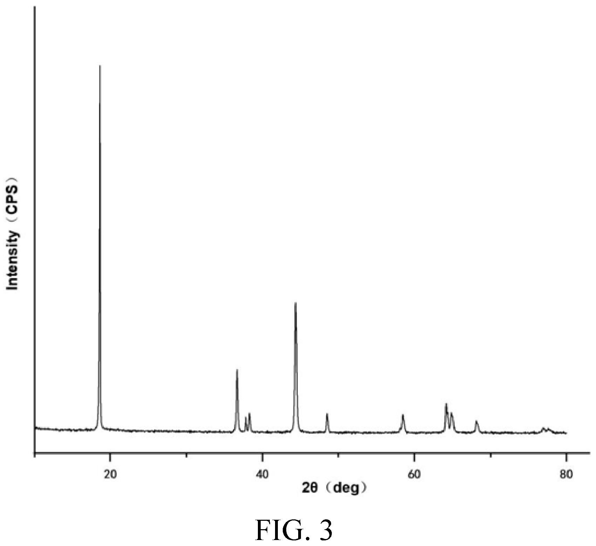

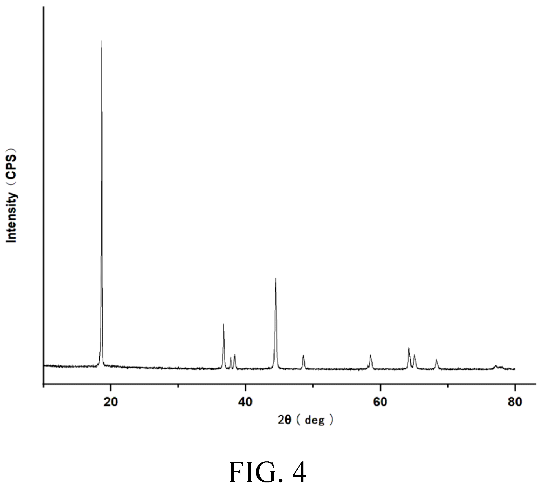

As shown in FIGS. 1 to 4, an embodiment of the present disclosure provides a positive electrode material for a lithium ion battery. The chemical formula of the positive electrode material is LiNi_{1-x-y}CoₓM_{y}M'_{b}O₂, wherein 0<x≤0.3, 0<y≤0.4, 0≤b≤0.05, M is selected from one or more of Mn, Ti, Zn, Mg, Mo, V, Ga, and Al, and M' is selected from one or more of Zr, Ti, Zn, Mg, Mo, V, Ga, and Al; in the X-ray diffraction pattern of the positive electrode material, it has a (108) diffraction peak at a diffraction angle 2θ of (64 ± 0.5) ° and a (110) diffraction peak at a diffraction angle 2θ of (65 ± 0.5) °;
the (108) diffraction peak and the (110) diffraction peak satisfy:
   $0.5 < \frac{FWHM \left(108\right) + FWHM \left(110\right)}{2 θ \left(110\right) - 2 θ \left(108\right)} ⩽ 0.75$
wherein FWHM (108) is the full width at half maximum of the (108) diffraction peak at the diffraction angle 2θ = (64 ± 0.5) °; and
FWHM (110) is the full width at half maximum of the (110) diffraction peak at the diffraction angle 2θ = (65 ± 0.5) °.

Lithium nickel cobalt manganate (ternary material) combines the advantages of lithium manganate, lithium cobalt oxide and lithium nickel oxide, and is widely applied in the positive electrode material in lithium ion batteries. The ternary material has a hexagonal layered structure, in which transition metal ions and lithium ions alternately occupy octahedral voids thereof and are arranged in a layered manner. This atomic arrangement structure enables the ternary material to have relatively superior electrochemical performance. Lithium ions can be freely intercalated into and deintercalated from between the layers, thereby achieving energy storage. However, during the intercalation and deintercalation of lithium ions, the crystal structure inside the ternary material undergoes varying degrees of change. For example, interlayer atomic rearrangement and changes in the layered structure orderliness can have a direct impact on the performance of the material.

Because the ternary material has a hexagonal crystal system, and the (110) crystal plane is related to the a and b axes, the unit cell parameter a is associated with the interplanar spacing of the (110) crystal plane. Meanwhile, the interplanar spacing of the (108) crystal plane has a strong correlation with the unit cell parameter c. Consequently, the distance relationship between the (110) crystal plane and the (108) crystal plane affects the layered structure orderliness of the ternary material. Additionally, the full widths at half maximum (FWHM) of the (110) crystal plane and (108) crystal plane in the XRD pattern directly or indirectly reflect the orderliness of atomic arrangement in the corresponding layered lattice. Through extensive research, the inventors have found that when the diffraction peak corresponding to the (108) crystal plane and the diffraction peak corresponding to the (110) crystal plane of the ternary material satisfy the relationship: $\frac{FWHM \left(108\right) + FWHM \left(110\right)}{2 θ \left(110\right) - 2 θ \left(108\right)}$, not only can the layered structure orderliness of the ternary material be assessed, but the rationality of the atomic arrangement between layers can also be evaluated. Moreover, when $0.5 < \frac{FWHM \left(108\right) + FWHM \left(110\right)}{2 θ \left(110\right) - 2 θ \left(108\right)} ⩽ 0.75$ , it can be ensured that the positive electrode material (i.e., the ternary material) has good layered structure orderliness and a reasonable atomic arrangement, thereby providing the positive electrode material with higher specific capacity and improving the cycle life of the battery.

Specifically, in the relational expression, 2θ (110) refers to the specific position of the (110) diffraction peak at a diffraction angle 2θ of (65±0.5)° in the X-ray diffraction pattern actually obtained when performing XRD testing on the positive electrode material. Generally, the value range of 2θ (110) is (65±0.5)°. Similarly, 2θ (108) refers to the specific position of the (108) diffraction peak at a diffraction angle 2θ of (64±0.5)° in the X-ray diffraction pattern actually obtained when performing XRD testing on the powder of the positive electrode material.

In some embodiments, the positive electrode material is a polycrystalline ternary material; the chemical formula of the positive electrode material is LiNi_{1-x-y}CoₓM_{y}M'_{b}O₂, wherein 0.1 ≤x≤0.2, 0.1≤y≤0.35, 0<b≤0.05, and M is selected from one or more of Mn, Ti, Zn, Mg, Mo, V, Ga and Al; and M' is selected from one or more of Zr, Ti, Zn, Mg, Mo, V, Ga, and Al.

In some embodiments, the chemical formula of the positive electrode material is LiNi_{1-x-y}CoₓM_{y}M'_{b}O₂ wherein 0.1≤x≤0.2, 0.1≤y≤0.3, 0<b≤0.05, and M is selected from one or more of Mn, Ti, Zn, Mg, Mo, V, Ga and Al; and M' is selected from one or more of Zr, Ti, Zn, Mg, Mo, V, Ga, and Al.

As the content of Ni element in the positive electrode material increases, the mass specific capacity of the ternary material significantly increases. However, as the content of Ni element in the positive electrode material increases, the atomic contents of the ternary material change, and the risk of lithium-nickel mixing also increases, leading to a reduction in cycle life. Therefore, when the above relational expression is satisfied, it can be ensured that the layered structure of the high-nickel positive electrode material has higher orderliness, and the positive electrode material has high specific capacity and cycle life.

In some embodiments, the chemical formula of the positive electrode material is LiNi_{1-x-y}CoₓM_{y}M'_{b}O₂, wherein 0.1≤x≤0.3, 0.1≤y≤0.3, 0<b≤0.05, and M is selected from one or more of Mn, Ti, Zn, Mg, Mo, V, Ga and Al; and M' is selected from one or more of Zr, Ti, Zn, Mg, Mo, V, Ga, and Al.

In some embodiments, the (108) diffraction peak and the (110) diffraction peak satisfy: $0.6 < \frac{FWHM \left(108\right) + FWHM \left(110\right)}{2 θ \left(110\right) - 2 θ \left(108\right)} ⩽ 0.75$.

In some embodiments, the (108) diffraction peak and the (110) diffraction peak satisfy: $0.67 < \frac{FWHM \left(108\right) + FWHM \left(110\right)}{2 θ \left(110\right) - 2 θ \left(108\right)} ⩽ 0.75$.

When the relational expression is within the above preferred range, the layered structure orderliness of the positive electrode material layer is relatively high, the stability of atomic arrangement between the layers is also higher, the specific capacity of the positive electrode material is high, and the cycle performance of the lithium ion battery is better.

In some embodiments, in the X-ray diffraction pattern of the positive electrode material, the full width at half maximum FWHM (108) of the (108) diffraction peak at a diffraction angle 2θ of (64 ± 0.5) ° is in a range of 0.1 to 0.3.

Specifically, the full width at half maximum FWHM (108) of the (108) diffraction peak at a diffraction angle 2θ of (65 ± 0.5) ° refers to the value of peak width of the (108) diffraction peak at a position parallel to the horizontal axis of the diffraction angle 2θ and at half the peak height of the (108) diffraction peak in the X-ray diffraction pattern. FWHM(108) is in a range of 0.1 to 0.3, and when $0.5 < \frac{FWHM \left(108\right) + FWHM \left(110\right)}{2 θ \left(110\right) - 2 θ \left(108\right)} ⩽ 0.75$ is satisfied, the positive electrode material has good layered structure orderliness and a higher specific capacity.

In some embodiments, in the X-ray diffraction pattern of the positive electrode material, the full width at half maximum FWHM (110) of the (110) diffraction peak at a diffraction angle 2θ of (65±0.5) ° is in a range of 0.1 to 0.3.

Specifically, the full width at half maximum FWHM (110) of the (110) diffraction peak at a diffraction angle 2θ of (65 ± 0.5) ° refers to the value of peak width of the (110) diffraction peak at a position parallel to the horizontal axis of the diffraction angle 2θ and at half the peak height of the (110) diffraction peak in the X-ray diffraction pattern. FWHM(110) is in a range of 0.1 to 0.3, and when $0.5 < \frac{FWHM \left(108\right) + FWHM \left(110\right)}{2 θ \left(110\right) - 2 θ \left(108\right)} ⩽ 0.75$ is satisfied, the positive electrode material has good layered structure orderliness and a higher specific capacity.

In some embodiments, the positive electrode material has an α-NaFeO₂ layered structure.

It is to be understood that the X-ray diffraction pattern of the positive electrode material in the present disclosure can be obtained by scanning at a scanning rate of 6°/min in a range of 10° to 80° using a copper target X-ray generator.

In a second aspect, the present disclosure provides a method for preparing a positive electrode material for a lithium ion battery, the method includes the following steps: a lithium-containing compound, a soluble metal salt, cobalt acetate, nickel acetate and a doped metal salt are dispersed in a solvent to obtain a dispersed solution, a pH adjuster is added into the dispersed solution to make the pH of the dispersed solution to 7 to 8, and dried to obtain a precursor material; the quasi-spherical precursor material is subjected to first sintering, first cooling, second sintering and second cooling in sequence to obtain the positive electrode material.

The first sintering includes the following steps: the precursor material is sintered for the first time in air atmosphere environment, the first sintering temperature is 300 to 600 °C, the first sintering time is 3 to 6 hours, and the first cooling is performed after the first sintering is completed.

The second sintering includes the following steps: after the first cooling is completed, the precursor material is sintered for the second time in a pure oxygen atmosphere environment, the second sintering temperature is 700 to 950 °C, the second sintering time is 8 to 15 hours, and the second cooling is performed after the second sintering is completed.

Compared with the prior art, the method for preparing a positive electrode material for a lithium-ion battery provided in the present disclosure has the following advantages: (1) in the present disclosure, a quasi-spherical precursor material is prepared by a one-step method. During the preparation process, the mixing of materials is uniform, no waste liquid is generated, the process is green and clean, and the preparation process is simple and controllable. The quasi-spherical precursor material obtained after drying is uniformly dispersed and has a regular surface morphology. Compared with other synthesis methods, the precursor material prepared in the present disclosure can increase the compacted density of the positive electrode sheet. (2) The pH adjuster added during the preparation of the precursor enables the obtained precursor to have an organic coating without the need for a secondary coating. The final product positive electrode material obtained after sintering has a residual carbon content of 0.1 %wt to 3 %wt. (3) Two sintering steps are employed to achieve crystallization of the final product and carbonization of the coating layer. The purpose of adopting a two-stage cooling method is to control the grain size of the intermediate product, allowing the material grains to rapidly stabilize at a fixed size, which is conducive to increasing the compacted density of the positive electrode material while also avoiding the formation of other impurities and improving the layered structure orderliness of the positive electrode material. The two-sintering and two-stage cooling method saves cooling time of the sintering equipment, shortens the process time, and also facilitates obtaining a positive electrode material with a highly ordered layered structure, thereby providing the positive electrode material with a higher specific capacity.

In some embodiments, the soluble metal salt and the doped metal salt both include one or more of manganese acetate, titanium acetate, zinc acetate, magnesium acetate, molybdenum acetate, vanadium acetate, germanium acetate, aluminum acetate, zirconium acetate, manganese nitrate, titanium nitrate, zinc nitrate, magnesium nitrate, molybdenum nitrate, vanadium nitrate, germanium nitrate, aluminum nitrate, zirconium nitrate, manganese hydroxide, titanium hydroxide, zinc hydroxide, magnesium hydroxide, molybdenum hydroxide, vanadium hydroxide, germanium hydroxide, zirconium hydroxide, and aluminum hydroxide;

the lithium-containing compound includes one or more of lithium hydroxide, lithium nitrate, lithium carbonate, lithium acetate, lithium chloride, lithium fluoride, and lithium iodide; and

the solvent includes one or more of deionized water, ethanol, methanol, isopropanol, n-butanol, octanol, and decanol.

During the preparation of the quasi-spherical precursor material, adding a soluble metal salt facilitates dissolution in the solvent, accelerates the dispersion rate, and improves the mixing uniformity of the mixing materials.

For example, when the solvent is water, soluble metal salts such as manganese acetate, aluminum acetate, and aluminum nitrate are all soluble in water.

In some embodiments, the lithium-containing compound is lithium hydroxide.

In some embodiments, the lithium-containing compound, soluble metal salt, nickel acetate, cobalt acetate and doped metal salt are in a metal element molar ratio of (1-1.2):y:1-x-y:x:b, wherein 0<x≤0.3, 0<y≤0.4, 0≤b≤0.05.

Specifically, by controlling the metal element molar ratio of the lithium-containing compound, the soluble metal salt, nickel acetate, and cobalt acetate to be within a range of (1-1.2):y:(1-x-y):x, the positive electrode material having a chemical formula of LiNi_{1-x-y}CoₓM_{y}M'_{b}O₂ can be prepared, wherein 0<x≤0.3, 0<y≤0.4, and M is selected from one or more of Mn, Ti, Zn, Mg, Mo, V, Ga, and Al. By controlling the metal element molar ratio of the lithium-containing compound, the soluble metal salt, nickel acetate, cobalt acetate, and the doping metal salt to be within a range of (1-1.2):y:(1-x-y):x:b, the positive electrode material doped with a metal element M' can be prepared, having a chemical formula of LiNi_{1-x-y}CoₓM_{y}M'_{b}O₂, wherein 0<x≤0.3, 0<y≤0.4, 0≤b ≤0.05, M is selected from one or more of Mn, Ti, Zn, Mg, Mo, V, Ga, and Al, and M' is selected from one or more of Zr, Ti, Zn, Mg, Mo, V, Ga, and Al.

In some embodiments, the concentration of the pH adjuster is 1 mol/L to 3 mol/L, and the pH adjuster includes, but is not limited to, one or more of citric acid, acetic acid, oxalic acid, benzoic acid, acrylic acid, carboxylated graphene, and carboxylated graphite.

Specifically, when a pH adjuster is added during the preparation of the quasi-spherical precursor material, the obtained quasi-spherical precursor material is an organic-coated material. This eliminates the need for a secondary coating, thereby saving costs and shortening the process time. Meanwhile, after sintering, the final product positive electrode material obtained from the quasi-spherical precursor material has a residual carbon content of 0.1 %wt to 3 %wt.

In some embodiments, the pH adjuster is citric acid. Citric acid is a carbon-containing compound. Adopting citric acid to adjust the pH of the solution yields a quasi-spherical precursor material that is also an organic-coated material, eliminating the need for a secondary coating, thereby saving costs and shortening the process time. Meanwhile, after sintering, the final product positive electrode material obtained from the quasi-spherical precursor material has a residual carbon content of 0.1 %wt to 3 %wt.

If the residual carbon content of the positive electrode material is too low, the conductivity of the positive electrode material decreases, increasing the battery impedance. If the residual carbon content of the positive electrode material is higher than 3 %wt, the carbon content per unit mass of the positive electrode material is too high, resulting in a relatively lower content of active lithium ions and thus a reduction in the energy density of the battery.

In some embodiments, the lithium hydroxide, manganese acetate, nickel acetate, and cobalt acetate are in a metal element molar ratio of 1.02:y:(1-x-y):x, wherein 0 < x ≤ 0.3 and 0 < y ≤ 0.4.

In some embodiments, the lithium hydroxide, manganese acetate, nickel acetate, and cobalt acetate are in a metal element molar ratio of 1.02:y:(1-x-y):x, wherein 0 <x ≤0.2 and 0 <y ≤0.2.

In some embodiments, the lithium hydroxide, manganese acetate, nickel acetate, cobalt acetate, zirconium acetate are in a metal element molar ratio of 1.02:y:(1-x-y):x:b, wherein 0 <x≤0.3, 0<y≤0.4, and 0≤b≤0.05.

In some embodiments, the lithium hydroxide, manganese acetate, nickel acetate, and cobalt acetate are in a metal element molar ratio of 1.02:0.2:0.6:0.2.

In some embodiments, the lithium hydroxide, manganese acetate, nickel acetate, and cobalt acetate are in a metal element molar ratio of 1.02:0.2:0.5:0.2.

In some embodiments, the lithium hydroxide, manganese acetate, nickel acetate, and cobalt acetate are in a metal element molar ratio of 1.02:0.2:0.7:0.2.

In some embodiments, the lithium hydroxide, manganese acetate, nickel acetate, and cobalt acetate are in a metal element molar ratio of 1.02:0.2:0.8:0.2.

In some embodiments, in the step of drying to obtain the quasi-spherical precursor material, the drying method is one or more of spray drying, flash evaporation, stirring drying, and dynamic drying. In an embodiment, the drying method is spray drying.

Specifically, the dynamic drying includes reduced-pressure drying and freeze drying. The precursor material prepared by a drying method such as spray drying or dynamic drying has a microstructure in the form of a spherical or disc-like structure, i.e., a quasi-spherical precursor material, and enables the obtaining of a precursor material that is uniformly dispersed and has a regular surface morphology.

In some embodiments, the specific steps for obtaining a quasi-spherical material precursor by spray drying include: the dispersion liquid is spray-dried to obtain a quasi-spherical precursor material. The specific parameters of the spray drying are: a feed rate of 35 mL/min, an inlet air temperature of 150 °C, and a nozzle rotation speed of 240 rpm.

In some embodiments, the first sintering includes the following steps: a quasi-spherical material precursor is sintered for the first time in an air atmosphere environment, wherein the heating rate in the first sintering is 1 to 8 °C/min, when the first sintering temperature is 300 to 600 °C, the first sintering time (or first holding time) is 3 to 6 hours, the first cooling is performed after the first sintering is completed, the first cooling temperature is 20 to 30 °C, and the cooling method is quenching, and the material after sintering is directly transferred to room temperature.

Specifically, the air atmosphere environment refers to an atmospheric environment. Performing the first sintering operation on the quasi-spherical precursor material facilitates the formation of the positive electrode material with good crystallinity, while carbonizing an organic coating layer of the quasi-spherical precursor material can improve the true density of the material and adjust the specific surface of the material. The first cooling is performed after the first sintering is completed, it is intended to control the grain size of the intermediate product, allowing the material grains to rapidly stabilize at a fixed size, which ensures rapid crystallization of the material, avoids the formation of other phases, and improves the layered structure orderliness of the material. Specifically, the first sintering temperature may be 300 °C, 350 °C, 380 °C, 400 °C, 430 °C, 460 °C, 500 °C, 530 °C, 550 °C, 580 °C, 600 °C, or the like, as long as the first sintering temperature is between 300 °C and 600 °C.

In some embodiments, the quasi-spherical material precursor is sintered in air atmosphere environment at a first sintering temperature of 300 °C for 3 hours, followed by a first cooling step.

In some embodiments, the second sintering includes the following steps: after the first cooling is completed, the precursor material is sintered for the second time in a pure oxygen atmosphere environment, in the second sintering, the heating rate is 1 to 8 °C/min, the second sintering temperature is 700 to 950 °C, the second sintering time (or second holding time) is 8h to 15 h, the second cooling is performed after the second sintering is completed, the second cooling temperature is 20 to 30 °C, and the cooling method is quenching, and the material after sintering is directly transferred to room temperature.

Specifically, the pure oxygen atmosphere environment refers to a space filled with pure oxygen, and the second sintering is performed in a space filled with pure oxygen. The first sintering and the second sintering have the same functions, both of which facilitate the formation of the positive electrode material with good crystallinity, while carbonizing an organic coating layer of the quasi-spherical precursor material can improve the denseness of the material and adjust the specific surface of the material. The first cooling and the second cooling also have the same functions, and are intended to control the grain size of the intermediate product, allowing the material grains to rapidly stabilize at a fixed size, thereby increasing the compaction density of the positive electrode material during electrode sheet preparation. At the same time, they also ensure rapid crystallization of the material, avoid the formation of other phases, and improve the layered structure orderliness of the material. Specifically, the second sintering temperature may be 700 °C, 730 °C, 750 °C, 790 °C, 800 °C, 820 °C, 850 °C, 870 °C, 900 °C, 930 °C, 950 °C, or the like, as long as the second sintering temperature is between 700 °C and 950 °C.

In some embodiments, the quasi-spherical material precursor is sintered in the pure oxygen atmosphere environment at a second sintering temperature of 950 °C for 10 hours, followed by a second cooling step.

If the first sintering temperature is lower than 300 °C, or the second sintering temperature is lower than 700 °C, the crystallinity of the positive electrode material is low and the crystallization is not perfect enough, which adversely affects the cycle performance of the battery. A sintering temperature that is too low tends to cause incomplete reaction of the material and readily leads to the formation of impurity phases. If the first sintering temperature is higher than 600 °C, or the second sintering temperature is higher than 950 °C, the final product material has large particle sizes, resulting in an excessively long lithium ion conduction path, which adversely affects the discharge specific capacity and the internal resistance of the battery, and also tends to cause an excessively low carbon content.

It is to be understood that the equipment used for the first sintering and the second sintering includes one of a tube furnace, a box furnace, a fluidized bed, a rotary kiln, a microwave furnace, and a tunnel furnace.

In some embodiments, in the step of dispersing a lithium-containing compound, a soluble metal salt, cobalt acetate, and nickel acetate in a solvent, the dispersing and dissolving manner includes at least one selected from ultrasonication, mechanical stirring, magnetic stirring, high-energy ball milling, jar milling, high-shear dispersion, and high-pressure dispersion.

In a third aspect, the present disclosure provides a positive electrode sheet. The positive electrode sheet includes the above positive electrode material for a lithium ion battery or the above positive electrode material prepared by the above method for preparing the positive electrode material for a lithium ion battery.

The positive electrode sheet provided in the present disclosure includes the above positive electrode material and has a higher specific capacity, and a battery prepared therefrom has a better cycle life.

In some embodiments, the positive electrode sheet includes the positive electrode material, the chemical formula of the positive electrode material is LiNi_{1-x-y}CoₓM_{y}M'_{b}O₂, wherein 0 <x≤0.3, 0<y≤0.3, M is selected from one or more of Mn, Ti, Zn, Mg, Mo, V, Ga, and Al;

or the chemical formula of the positive electrode material is LiNi_{1-x-y}CoₓM_{y}M'_{b}O₂, wherein 0<x≤0.3, 0<y≤0.4, and 0<b≤0.05, M is selected from one or more of Mn, Ti, Zn, Mg, Mo, V, Ga, and Al; and M' is selected from one or more of Zr, Ti, Zn, Mg, Mo, V, and Ga.

A positive electrode sheet prepared by employing the above positive electrode material, is applied in a battery, so that the battery has the higher energy density, capacity, and cycle life.

In some embodiments, the compaction density of the positive electrode sheet is 3 g/cm³ to 3.7 g/cm³.

Compared with the prior art, the positive electrode sheet prepared by employing the positive electrode material according to the present disclosure has a relatively complete layered structure and a higher compaction density. When applied in a battery, the positive electrode sheet can improve the cycle life of the battery.

In a fourth aspect, the present disclosure provides a positive electrode sheet. The positive electrode sheet includes a positive electrode material, the chemical formula of the positive electrode material is Li_{z}Ni_{1-x-y}CoₓM_{y}M'_{b}O₂, wherein 0<x≤0.3, 0<y≤0.4, 0≤b≤0.05, M is selected from one or more of Mn, Ti, Zn, Mg, Mo, V, Ga, and Al, and M' is selected from one or more of Zr, Ti, Zn, Mg, Mo, V, and Ga;
in the X-ray diffraction pattern of the positive electrode material, it has a (108) diffraction peak at a diffraction angle 2θ of (64 ± 0.5) ° and a (110) diffraction peak at a diffraction angle 2θ of (65 ± 0.5) °;
the (108) diffraction peak and the (110) diffraction peak satisfy:
   $0.5 < \frac{FWHM \left(108\right) + FWHM \left(110\right)}{2 θ \left(110\right) - 2 θ \left(108\right)} ⩽ 0.8$
wherein FWHM (108) is the full width at half maximum of the (108) diffraction peak at the diffraction angle 2θ = (64 ± 0.5) °; and FWHM (110) is the peak width of the (110) diffraction peak at the diffraction angle 2θ = (65 ± 0.5) °.

According to the positive electrode sheet provided in the present disclosure, in the X-ray diffraction pattern of the positive electrode sheet, the (108) diffraction peak and the (110) diffraction peak satisfy: $0.5 < \frac{FWHM \left(108\right) + FWHM \left(110\right)}{2 θ \left(110\right) - 2 θ \left(108\right)} ⩽ 8$. This not only ensures the integrity of crystal structure of the positive electrode material in the positive electrode sheet and prevents damage to the positive electrode material during the electrode sheet preparation process, but also provides a lithium-ion battery including the positive electrode sheet satisfying this relationship with improved specific capacity and cycle life.

In a fifth aspect, the present disclosure provides a lithium ion battery, and the lithium ion battery includes the above positive electrode sheet.

A lithium-ion battery obtained by employing the positive electrode material of the present disclosure or a positive electrode sheet prepared therefrom has a relatively complete layered structure of the positive electrode material, and exhibits higher specific capacity and cycle life.

The present disclosure will be further described in detail below by means of embodiment.

### Embodiment 1

The embodiment is provided to illustrate the positive electrode material for a lithium-ion battery disclosed in the present disclosure and the preparation method thereof, including the following steps:

the lithium hydroxide, manganese acetate, nickel acetate, and cobalt acetate, and zirconium nitrate (dopant) are weighed according to a metal element molar ratio of 1.03:0.35:0.50:0.15:0.003, and then are dispersed and dissolved by mechanical stirring to obtain a dispersed solution. Thereafter, a citric acid solution having a concentration of 1 mol/L as a pH adjuster is added dropwise into the dispersed solution until the pH of the dispersed solution is adjusted to 8. Subsequently, the solution is fed into a spray dryer, and the feed rate of the solution is adjusted to 35 mL/min, the inlet air temperature of the solution is adjusted to 150 °C, and the nozzle rotation speed of the solution is adjusted to 240 rpm. The dried powder is collected to obtain a quasi-spherical precursor material. Then, the quasi-spherical precursor material is sintered for the first time in air atmosphere environment using a tube furnace. The temperature is increased to 300 °C at a heating rate of 3 °C/min, and the material is kept at 300 °C for 3 hours. Thereafter, a first cooling is performed. The cooling method is quenching, i.e., the sintered material is directly placed at room temperature and cooled by air exchange, or the material is cooled by a rapid temperature reduction program (at a cooling rate of 50 °C/min to a temperature of 25 °C). Subsequently, a second sintering is performed in a pure oxygen atmosphere. The temperature is increased to 950 °C at a heating rate of 5 °C/min, and the material is kept at the second sintering temperature of 950 °C for 10 hours for the second sintering. Thereafter, a second cooling is performed, i.e., the sintered material is directly placed at room temperature and cooled by air exchange, or the material is cooled by a rapid temperature reduction program (at a cooling rate of 50 °C/min to a temperature of 25 °C), to obtain a final product positive electrode material. The final product positive electrode material is subjected to XRD measurement using a copper target X-ray generator, with a scan range of 10° to 80° and a scanning rate of 6°/min. The obtained XRD pattern is shown in FIG. 1.

### Embodiment 2

The difference between Embodiment 2 and Embodiment 1 lies in the second sintering temperature, specifically, the second sintering temperature is 850 °C, and the remaining preparation method is the same as that of Embodiment 1.

### Embodiment 3

The difference between Embodiment 3 and Embodiment 1 lies in the second sintering temperature and time in Embodiment 3, specifically, the second sintering is performed at a second sintering temperature of 950 °C for 15 hours, and the remaining preparation method is the same as that of Embodiment 1.

### Embodiment 4

The difference between Embodiment 4 and Embodiment 1 lies in the second sintering temperature and time in Embodiment 4, specifically, the second sintering is performed at a second sintering temperature of 950 °C for 6 hours, and the remaining method is the same as that of Embodiment 1.

### Embodiment 5

The difference between Embodiment 5 and Embodiment 1 lies in the first sintering temperature, specifically, the first sintering is performed at a first sintering temperature of 600 °C for 3 hours, and the remaining method is the same as that of Embodiment 1.

### Embodiment 6

The difference between Embodiment 6 and Embodiment 1 lies in the first sintering time, specifically, the first sintering is performed at a first sintering temperature of 300 °C for 6 hours, and the remaining method is the same as that of Embodiment 1.

### Embodiment 7

The difference between Embodiment 7 and Embodiment 1 lies in the second sintering temperature, specifically, the second sintering is performed at a second sintering temperature of 700 °C for 10 hours, and the remaining method is the same as that of Embodiment 1.

### Embodiment 8

The difference between Embodiment 8 and Embodiment 1 lies in that no dopant metal salt (zirconium acetate) is added to the reactants. The metal element molar ratio of lithium hydroxide, manganese acetate, nickel acetate, and cobalt acetate is 1.03:0.35:0.50:0.15, and the remaining method is the same as that of Embodiment 1.

### Embodiment 9

The difference between Embodiment 9 and Embodiment 1 lies in the molar ratio of the reactants, specifically, the metal element molar ratio of lithium hydroxide, manganese acetate, nickel acetate, cobalt acetate, and zirconium acetate is 1.03:0.35:0.50:0.15:0.045, and the remaining method is the same as that of Embodiment 1.

### Embodiment 10

The difference between Embodiment 10 and Embodiment 1 lies in the molar ratio of the reactants, specifically, the metal element molar ratio of lithium hydroxide, manganese acetate, nickel acetate, cobalt acetate, and zirconium acetate is 1.03:0.35:0.50:0.15:0.02, and the remaining method is the same as that of Embodiment 1.

### Embodiment 11

The difference between Embodiment 11 and Embodiment 1 lies in the molar ratio of the reactants, specifically, the metal element molar ratio of lithium hydroxide, manganese acetate, nickel acetate, cobalt acetate, and zirconium acetate is 1.03:0.35:0.50:0.15:0.001, and the remaining method is the same as that of Embodiment 1.

### Embodiment 12

The difference between Embodiment 12 and Embodiment 1 lies in the molar ratio of the reactants, specifically, the metal element molar ratio of lithium hydroxide, manganese acetate, nickel acetate, cobalt acetate, and zirconium acetate is 1.02:0.28:0.60:0.22:0.01, and the remaining method is the same as that of Embodiment 1.

### Comparative embodiment 1

The difference between Comparative embodiment 1 and Embodiment 1 lies in the second sintering conditions, specifically, the second sintering is performed in a pure air atmosphere, the second sintering is performed at a second sintering temperature of 650 °C for 10 hours, and the remaining method is the same as that of Embodiment 1.

### Comparative embodiment 2

The difference between Comparative embodiment 2 and Embodiment 1 lies in the first sintering temperature and time, specifically, the first sintering is performed at a first sintering temperature of 250 °C for 3 hours, and the remaining method is the same as that of Embodiment 1.

### Comparative embodiment 3

The difference between Comparative embodiment 3 and Embodiment 1 lies in the first sintering conditions, specifically, the first sintering is performed in a pure air atmosphere, the first sintering is performed at a first sintering temperature of 650 °C for 3 hours, and the remaining method is the same as that of Embodiment 1.

### Comparative embodiment 4

The difference between Comparative embodiment 4 and Embodiment 1 lies in the second sintering conditions, specifically, the second sintering is performed in a pure oxygen atmosphere, the second sintering is performed at a second sintering temperature of 1100 °C for 10 hours, and the remaining method is the same as that of Embodiment 1.

### Comparative embodiment 5

The difference between Comparative embodiment 5 and Embodiment 1 lies in that the first cooling is not performed. Instead, the atmosphere is directly changed to a pure oxygen atmosphere for the second sintering, and the remaining method is the same as that of Embodiment 1.

### Comparative embodiment 6

The difference between Comparative embodiment 6 and embodiment 12 lies in the second sintering conditions, specifically, the second sintering is performed in a pure oxygen atmosphere, the second sintering is performed at a second sintering temperature of 650 °C for 10 hours, and the remaining method is the same as that of Embodiment 12.

The carbon residue contents of the positive electrode materials prepared in Embodiments 1 to 12 and Comparative embodiments 1 to 6 described above are measured with a CS analyzer.

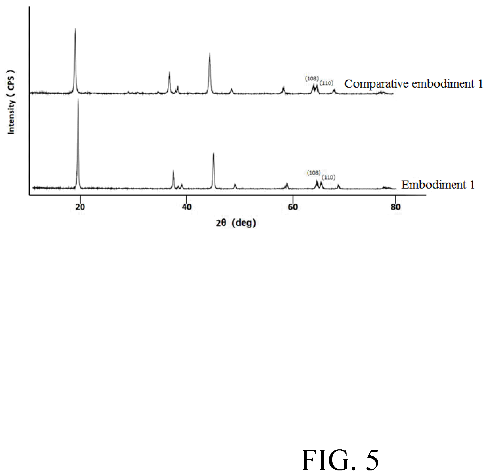

The specific data of FWHM(108), FWHM(110), 2θ(108), and 2θ(110) in the XRD patterns obtained after XRD testing of the positive electrode materials prepared in Embodiments 1 to 12 and Comparative Embodiments 1 to 6 described above are recorded in Table 1. The XRD peak width and peak position data are obtained from the analysis of the original XRD test files with the processing software MDI Jade 6, and the specific data are shown in Table 1. The XRD patterns of the positive electrode materials prepared in Embodiments 1 to 4 are shown in FIGS. 1 to 4, respectively. A comparative graph of the XRD patterns of the positive electrode materials prepared in Embodiment 1 and Comparative Embodiment 1 is shown in FIG. 5.

**Table 1 Partial data of positive electrode materials of Embodiments 1 to 16 and Comparative embodiments 1 to 8**

| Group | FWHM (108) | FWHM (110) | 2θ (110) | 2θ (108) | $\frac{FWHM \left(108\right) + FWHM \left(110\right)}{2 θ \left(110\right) - 2 θ \left(108\right)}$ | Residual carbon content (%) |
|---|---|---|---|---|---|---|
| Embodim ent 1 | 0.202 | 0.240 | 64.869 | 64.210 | 0.67 | 0.8 |
| Embodim ent 2 | 0.206 | 0.244 | 64.878 | 64.213 | 0.68 | 1.5 |
| Embodim ent 3 | 0.213 | 0.248 | 64.826 | 64.178 | 0.71 | 0.4 |
| Embodim ent 4 | 0.248 | 0.279 | 64.989 | 64.284 | 0.75 | 1.6 |
| Embodim ent 5 | 0.243 | 0.253 | 64.929 | 64.210 | 0.69 | 0.9 |
| Embodim ent 6 | 0.251 | 0.267 | 65.007 | 64.279 | 0.71 | 1.2 |
| Embodim ent 7 | 0.247 | 0.281 | 65.251 | 64.227 | 0.52 | 2 |
| Embodim ent 8 | 0.198 | 0.260 | 64.833 | 64.210 | 0.74 | 0.7 |
| Embodim ent 9 | 0.204 | 0.219 | 64.762 | 64.130 | 0.67 | 0.8 |
| Embodim ent 10 | 0.219 | 0.256 | 64.806 | 64.121 | 0.69 | 0.9 |
| Embodim ent 11 | 0.221 | 0.273 | 65.007 | 64.279 | 0.68 | 0.7 |
| Embodim ent 12 | 0.153 | 0.226 | 64.662 | 64.110 | 0.69 | 0.75 |
| Comparat ive embodim ent 1 | 0.211 | 0.221 | 64.662 | 64.223 | 0.98 | 2.5 |
| Comparat ive embodim ent 2 | 0.160 | 0.189 | 65.069 | 64.282 | 0.44 | 0.9 |
| Comparat ive embodim ent 3 | 0.158 | 0.211 | 65.237 | 64.277 | 0.38 | 0.7 |
| Comparat ive embodim ent 4 | 0.166 | 0.217 | 65.112 | 64.294 | 0.47 | 0.2 |
| Comparat ive embodim ent 5 | 0.268 | 0.229 | 64.884 | 64.259 | 0.80 | 0.7 |
| Comparat ive embodim ent 6 | 0.209 | 0.242 | 64.671 | 64.15 | 0.87 | 2.3 |

Positive electrode sheets S including the positive electrode materials of Embodiments 1, 4, 7, 10 and Comparative embodiments 1, 3 are selected. The specific data of FWHM (108), FWHM (110), 2θ (108), and 2θ (110) in the XRD patterns obtained after XRD testing of the above positive electrode sheet are recorded in Table 2. The XRD peak width and peak position data are obtained from the analysis of the original XRD test files with the processing software MDI Jade 6, and the specific data are shown in Table 2.

**Table 2 Partial data of positive electrode sheet**

| Group | FWHM (108) | FWHM (110) | 2θ (108) | 2θ (110) | $\frac{FWHM \left(108\right) + FWHM \left(110\right)}{2 θ \left(110\right) - 2 θ \left(108\right)}$ |
|---|---|---|---|---|---|
| Embodime nt S1 | 0.219 | 0.242 | 64.873 | 64.221 | 0.71 |
| Embodime nt S4 | 0.262 | 0.282 | 64.989 | 64.304 | 0.79 |
| Embodime nt S7 | 0.249 | 0.287 | 65.254 | 64.236 | 0.53 |
| Embodime nt S10 | 0.229 | 0.252 | 64.821 | 64.132 | 0.70 |
| Comparati ve embodime nt S1 | 0.201 | 0.221 | 64.662 | 64.223 | 0.96 |
| Comparati ve embodime nt S3 | 0.188 | 0.211 | 65.237 | 64.284 | 0.42 |

### Performance test

Positive electrode sheets and batteries are prepared with the positive electrode materials prepared in Embodiments 1 to 12 and Comparative embodiments 1 to 6 described above, and the following tests are performed.

Specific capacity test: the above positive electrode material, PVDF, and SP are mixed in a ratio of 96:3:1 using NMP as a solvent for 2 hours to form a stable and uniform positive electrode slurry. The positive electrode slurry is coated onto an aluminum foil with a coater, dried, and cold-pressed to obtain a positive electrode sheet having a compacted density of 3.0 to 3.70 g/cm³. The positive electrode sheet is then dried at 120 °C for 24 hours. A lithium sheet is configured as a negative electrode, a cellgard2300 porous membrane is configured as a separator, and a mixed electrolyte of 1 mol/LLiPF₆+DMC (1:1 by volume) is configured as an electrolyte. A 2032 coin cell is assembled and tested. The cell is subjected to charge-discharge testing at a rate of 0.2C, and the specific capacity obtained from the third discharge test is taken as the specific capacity of the positive electrode material.

The compacted density of the positive electrode sheet is tested by a method commonly used in the art.

Cycle performance test: using deionized water as a solvent, 95 wt% of negative electrode active material graphite, 2 wt% of binder SBR, 2 wt% of conductive agent graphite and 1 wt% of thickener CMC are added to deionized water to prepare a negative electrode slurry. The negative electrode slurry is coated onto a copper foil, dried, and cold-pressed to obtain a compacted density of 1.6 to 1.7 g/cm³.

Battery Preparation: the positive electrode sheets, negative electrode sheets, and separators prepared above are assembled into a bare cell according to a conventional preparation process. The bare cell is dried, filled with an electrolyte, and sealed to finally obtain a battery.

Room temperature cycle performance test: the cell obtained after formation is subjected to a cycle test at room temperature (25 °C). The cell is charged and discharged at a rate of 0.5C/0.5C, and the number of charge-discharge cycles at which the discharge capacity remained at 80% is recorded.

**Table 2 Performance data of Embodiments 1 to 12 and Comparative embodiments 1 to 6**

| Group | Mass specific capacity of positive electrode material | Compacted density of positive electrode sheet | Cycle life/cycles at 25 °C with 80% capacity retention |
|---|---|---|---|
| | (mAh/g) | (g/cm³) | |
| Embodiment 1 | 161 | 3.51 | 1225 |
| Embodiment 2 | 159 | 3.48 | 1269 |
| Embodiment 3 | 158 | 3.68 | 1270 |
| Embodiment 4 | 154 | 3.18 | 1250 |
| Embodiment 5 | 160 | 3.42 | 1263 |
| Embodiment 6 | 159 | 3.38 | 1256 |
| Embodiment 7 | 150 | 3.02 | 1200 |
| Embodiment 8 | 154 | 3.39 | 1258 |
| Embodiment 9 | 163 | 3.39 | 1231 |
| Embodiment 10 | 168 | 3.54 | 1303 |
| Embodiment 11 | 157 | 3.44 | 1265 |
| Embodiment 12 | 175 | 3.53 | 1261 |
| Comparative embodiment1 | 144 | 2.90 | 1081 |
| Comparative embodiment 2 | 140 | 3.05 | 1115 |
| Comparative embodiment 3 | 142 | 3.12 | 1112 |
| Comparative embodiment 4 | 146 | 3.21 | 1126 |
| Comparative embodiment 5 | 143 | 3.12 | 1151 |
| Comparative embodiment 6 | 160 | 3.44 | 1009 |

As can be seen from the comparison of Tables 1, 2 and FIGS. 1 to 5, when Embodiments 1 to 12 are compared with Comparative embodiments 1 to 6, in the X-ray diffraction patterns of the positive electrode material in Comparative embodiments 1 to 6, the value of $\frac{FWHM \left(108\right) + FWHM \left(110\right)}{2 θ \left(110\right) - 2 θ \left(108\right)}$ is greater than 0.75 or less than 0.5, the specific capacity of the prepared positive electrode material is low, and the cycle life of the battery is short, which indicates that the positive electrode material of the present disclosure has a (108) diffraction peak at a diffraction angle 2θ of (64 ± 0.5) ° and a (110) diffraction peak at a diffraction angle 2θ of (65 ± 0.5) ° in the X-ray diffraction pattern of the positive electrode material, and the (108) diffraction peak and the (110) diffraction peak satisfy $0.5 < \frac{FWHM \left(108\right) + FWHM \left(110\right)}{2 θ \left(110\right) - 2 θ \left(108\right)} ⩽ 0.75$, consequently, the layered structure of the positive electrode material layer has a higher orderliness, the positive electrode material has a high specific capacity, and the battery prepared therefrom exhibits a long cycle life at room temperature.

The above descriptions are merely preferred examples of the present disclosure and are not intended to limit the present disclosure. Any modifications, equivalent substitutions, improvements, etc., made within the spirit and principles of the present disclosure shall fall within the protection scope of the present disclosure.

## Claims

1. A positive electrode material for a lithium ion battery,
the chemical formula of the positive electrode material being LiNi_{1-x-y}CoₓM_{y}M'_{b}O₂, wherein 0<x≤0.3, 0<y≤0.4, 0≤b≤0.05, M being selected from one or more of Mn, Ti, Zn, Mg, Mo, V, Ga, and Al, and M' being selected from one or more of Zr, Ti, Zn, Mg, Mo, V, Ga, and Al;
in the X-ray diffraction pattern of the positive electrode material, having a (108) diffraction peak at a diffraction angle 2θ of (64 ± 0.5) ° and a (110) diffraction peak at a diffraction angle 2θ of (65 ± 0.5) °;
the (108) diffraction peak and the (110) diffraction peak satisfying: $0.5 < \frac{FWHM \left(108\right) + FWHM \left(110\right)}{2 θ \left(110\right) - 2 θ \left(108\right)} ⩽ 0.75$
wherein FWHM (108) being the full width at half maximum of the (108) diffraction peak at the diffraction angle 2θ = (64 ± 0.5) °; and
FWHM (110) being the full width at half maximum of the (110) diffraction peak at the diffraction angle 2θ = (65 ± 0.5) °.

2. The positive electrode material for a lithium ion battery according to claim 1, wherein the positive electrode material is a polycrystalline ternary material; the chemical formula of the positive electrode material is LiNi_{1-x-y}CoₓM_{y}M'_{b}O₂, wherein 0.1≤x≤0.2, 0.1≤y≤0.35, 0<b≤ 0.05, and M is selected from one or more of Mn, Ti, Zn, Mg, Mo, V, Ga and Al; and M' is selected from one or more of Zr, Ti, Zn, Mg, Mo, V, Ga, and Al.

3. The positive electrode material for a lithium ion battery according to claim 1 or 2, wherein the (108) diffraction peak and the (110) diffraction peak satisfy: $0.6 < \frac{FWHM \left(108\right) + FWHM \left(110\right)}{2 θ \left(110\right) - 2 θ \left(108\right)} ⩽ 0.75$.

4. The positive electrode material for a lithium ion battery according to any one of claims 1 to 3, wherein the (108) diffraction peak and the (110) diffraction peak satisfy: $0.67 < \frac{FWHM \left(108\right) + FWHM \left(110\right)}{2 θ \left(110\right) - 2 θ \left(108\right)} ⩽ 0.75$ .

5. The positive electrode material for a lithium ion battery according to any one of claims 1 to 4, wherein in the X-ray diffraction pattern of the positive electrode material, the full width at half maximum FWHM (108) of the (108) diffraction peak at a diffraction angle 2θ of (64 ± 0.5) ° is in a range of 0.1 to 0.3.

6. The positive electrode material for a lithium ion battery according to any one of claims 1 to 5, wherein in the X-ray diffraction pattern of the positive electrode material, the full width at half maximum FWHM (110) of the (110) diffraction peak at a diffraction angle 2θ of (65 ± 0.5) ° is in a range of 0.1 to 0.3.

7. The positive electrode material for a lithium ion battery according to any one of claims 1 to 6, wherein the positive electrode material has an α-NaFeO₂ layered structure.

8. A method for preparing a positive electrode material for a lithium ion battery according to any one of claims 1 to 7, comprising the following steps:
dispersing a lithium-containing compound, a soluble metal salt, cobalt acetate, nickel acetate and a doped metal salt in a solvent to obtain a dispersed solution, adding a pH adjuster into the dispersed solution to make the pH of the dispersed solution to 7 to 8, and drying to obtain a precursor material; subjecting the precursor material to first sintering, first cooling, second sintering and second cooling in sequence to obtain the positive electrode material;
the first sintering comprising the following steps: sintering the precursor material for the first time in air atmosphere environment, the first sintering temperature being 300 to 600 °C, the first sintering time being 3 to 6 hours, and the first cooling being performed after the first sintering being completed;
the second sintering comprising the following steps: after the first cooling being completed, sintering for the second time in a pure oxygen atmosphere environment, the second sintering temperature being 700 to 950 °C, the second sintering time being 8 to 15 hours, and the second cooling being performed after the second sintering being completed.

9. The method for preparing a positive electrode material for a lithium ion battery according to claim 8, wherein the soluble metal salt and the doped metal salt both comprise one or more of manganese acetate, titanium acetate, zinc acetate, magnesium acetate, molybdenum acetate, vanadium acetate, germanium acetate, aluminum acetate, zirconium acetate, manganese nitrate, titanium nitrate, zinc nitrate, magnesium nitrate, molybdenum nitrate, vanadium nitrate, germanium nitrate, aluminum nitrate, zirconium nitrate, manganese hydroxide, titanium hydroxide, zinc hydroxide, magnesium hydroxide, molybdenum hydroxide, vanadium hydroxide, germanium hydroxide, aluminum hydroxide, and zirconium hydroxide;
the lithium-containing compound comprises one or more of lithium hydroxide, lithium nitrate, lithium carbonate, lithium acetate, lithium chloride, lithium fluoride, and lithium iodide; and
the solvent comprises one or more of deionized water, ethanol, methanol, isopropanol, n-butanol, octanol, and decanol.

10. The method for preparing a positive electrode material for a lithium ion battery according to claim 8 or 9, wherein the lithium-containing compound, soluble metal salt, nickel acetate, cobalt acetate and doped metal salt are in a metal element molar ratio of (1-1.2):y:1-x-y:x:b, wherein 0 <x≤0.3, 0<y≤0.4, 0≤b≤0.05.

11. The method for preparing a positive electrode material for a lithium ion battery according to any one of claims 8 to 10, wherein the concentration of the pH adjuster is 1 mol/L to 3 mol/L, and the pH adjuster comprises one or more of citric acid, acetic acid, oxalic acid, benzoic acid, acrylic acid, carboxylated graphene, and carboxylated graphite.

12. The method for preparing a positive electrode material for a lithium ion battery according to any one of claims 8 to 11, wherein in the step of drying to obtain the precursor material, the drying method is one or more of spray drying, flash evaporation, stirring drying, and dynamic drying.

13. The method for preparing a positive electrode material for a lithium ion battery according to any one of claims 8 to 12, wherein in the first sintering, the heating rate is 1 to 8 °C/min, the first cooling temperature is 20 to 30 °C, and the cooling method is quenching, and the material after the first sintering is directly transferred to room temperature; and
in the second sintering, the heating rate is 1 to 8 °C/min, the second cooling temperature is 20 to 30 °C, and the cooling method is quenching, and the material after the second sintering is directly transferred to room temperature.

14. A positive electrode sheet comprising the positive electrode material for a lithium ion battery according to any one of claims 1 to 7, or the positive electrode material prepared by the method for preparing the positive electrode material for a lithium ion battery according to any one of claims 8 to 13.

15. The positive electrode sheet according to claim 14, wherein the compaction density of the positive electrode sheet is 3 g/cm³ to 3.7 g/cm³.

16. A positive electrode sheet comprising a positive electrode material, the chemical formula of the positive electrode material being LiNi_{1-x-y}CoₓM_{y}M'_{b}O₂, wherein 0<x≤0.3, 0<y≤0.4, 0≤b ≤0.05, M being selected from one or more of Mn, Ti, Zn, Mg, Mo, V, Ga, and Al, and M' being selected from one or more of Zr, Ti, Zn, Mg, Mo, V, and Ga;
in the X-ray diffraction pattern of the positive electrode material, having a (108) diffraction peak at a diffraction angle 2θ of (64 ± 0.5) ° and a (110) diffraction peak at a diffraction angle 2θ of (65 ± 0.5) °;
the (108) diffraction peak and the (110) diffraction peak satisfying: $0.5 < \frac{FWHM \left(108\right) + FWHM \left(110\right)}{2 θ \left(110\right) - 2 θ \left(108\right)} ⩽ 0.8$
wherein FWHM (108) being the full width at half maximum of the (108) diffraction peak at the diffraction angle 2θ = (64 ± 0.5) °; and FWHM (110) being the full width at half maximum of the (110) diffraction peak at the diffraction angle 2θ = (65 ± 0.5) °.

17. A lithium ion battery comprising the positive electrode sheet according to any one of claims 14 to 15 or the positive electrode sheet according to claim 16.
